Europäisches Patentamt

European Patent Office

Office européen des brevets

(11) Numéro de publication: **0 409 946 B1**

(19)

## (12) FASCICULE DE BREVET EUROPEEN

(45) Date de publication de fascicule du brevet:  **06.04.94**

(21) Numéro de dépôt: **90902291.5**

(22) Date de dépôt: **23.01.90**

(86) Numéro de dépôt internationale :
**PCT/FR90/00049**

(87) Numéro de publication internationale :
**WO 90/08790 (09.08.90 90/19)**

Le dossier contient des informations techniques présentées postérieurement au dépôt de la demande et ne figurant pas dans le présent fascicule.

(51) Int. Cl.⁵: $C08G$ **8/04**, $C08L$ 61/06, $C08L$ 27/00

㊓ **NOUVELLES NOVOLAOUES DE TYPE PHENOL-ALDEHYDE LOURD.**

(30) Priorité: **25.01.89 FR 8900876**

(43) Date de publication de la demande:
**30.01.91 Bulletin  91/05**

(45) Mention de la délivrance du brevet:
**06.04.94 Bulletin  94/14**

(84) Etats contractants désignés:
**AT BE CH DE DK ES FR GB IT LI LU NL SE**

(56) Documents cités:
**DE-A- 2 821 294**
**FR-A- 2 132 359**
**GB-A- 790 644**
**US-A- 2 131 249**

(73) Titulaire: **CECA S.A.**
**4 - 8, Cours Michelet**
**La Défense 10**
**F-92800 Puteaux(FR)**

(72) Inventeur: **DREYFUS, Thierry**
**11, allée d'Olinval**
**Domaine de Rimberlieu**
**F-60140 Villiers-sur-Coudun(FR)**
Inventeur: **LE BOURT, Noel**
**45, rue Hurtebise**
**F-60200 Compiègne(FR)**

(74) Mandataire: **Haicour, Philippe**
**ELF ATOCHEM S.A., D.P.I.**
**4-8, Cours Michelet**
**La Défense 10 - Cédex 42**
**F-92091 Paris La Défense (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 409 946 B1

**Description**

I - DOMAINE TECHNIQUE

La présente invention concerne des résines novolaques phénoliques obtenues par condensation avec des aldéhydes aliphatiques lourds, un procédé pour leur synthèse, et leur application au renforcement du caoutchouc.

Les résines phénoliques, qui sont des produits de condensation de phénols et d'aldéhydes, sont connues depuis plus de 75 ans (Baekeland, 1907, compositions de produits moulables). Elles ont été classées en deux groupes:
- les résols (dites résines one-step), produits thermoréactifs obtenus avec un rapport aldéhyde/ phénol supérieur à 1 et dans des conditions de catalyse basique;
- les novolaques (dites résines two-step), produits thermoplastiques obtenus avec un rapport aldéhyde/phénol inférieur à 1 et dans des conditions de catalyse acide. Ces novolaques peuvent être ensuite réticulées sous l'effet de donneurs de formaldéhyde, par exemple l'hexaméthylènetétramine ou encore des résines, telles les résols phénoliques ou les résines mélamine formol plus ou moins éthérifiées.

II - TECHNIQUE ANTERIEURE

Les novolaques ont depuis longtemps reçu d'importantes applications industrielles, par exemple poudres à mouler, résines liantes pour garnitures de freins. Elles offrent un intérêt tout particulier pour les renforcements des caoutchoucs dans lesquels on réalise des pièces devant résister à l'abrasion ou à la déformation, par exemple bandes de roulement ou talons des pneumatiques, lèche-vitres, rouleaux de bandes transporteuses, rouleaux d'imprimerie.

L'aldéhyde de loin le plus utilisé pour la synthèse des novolaques est le formaldéhyde ou l'un de ses précurseurs, le paraformaldéhyde, le trioxane ou l'hexaméthylènetétramine. Dans une moindre mesure, on a également utilisé des aldéhydes aliphatiques. C'est ainsi que l'on trouve décrit l'emploi de l'acétaldéhyde ou du paraldéhyde (un polymère de l'acétaldéhyde) dans le brevet allemand DP 365 286 (Farbwerk vorm. Meister Lucius & Brüning, 1920), dans le brevet US 1 370 666 (EE Novotny, 1921), ou le brevet US 1 598 546 (Bakelite Corp., 1926). Dans le brevet US 2 176 951 (Resinox Corp., 1937), qui revendique la synthèse de résines phénol/butyraldéhyde avec des catalyseurs basiques, l'exemple est donné pour un rapport phénol:butyraldéhyde de 1:0,7. Le brevet US 2 231 860 (Monsanto, 1941), décrit des résines mixtes phénol/butyraldéhyde/formaldéhyde obtenues par condensation en deux étapes, condensation du phénol avec le butyraldéhyde avec des catalyseurs acides ou basiques, puis condensation avec le formaldéhyde en milieu acide. Dans le brevet européen EP 19151 (BASF, 1980), sont décrites des résines phénol/isobutyraldéhyde destinées à la fabrication d'encres pour flexographie, réalisées avec des rapports molaires isobutyraldéhyde:phénol apparemment supérieurs à 1. Cependant on peut lire (voir page 3, lignes 1 à 3 de la traduction française de ce brevet) que si ces résines novolaques sont bien préparées avec des rapports molaires isobutyraldéhyde:phénol compris entre 1,2:1 et 1,3:1 , leur rapport véritable molaire après réaction est en fait inférieur à 1. L'excès d'isobutyraldéhyde est probablement engagé dans des condensats à bas poids moléculaires dont l'élimination par entraînement à la vapeur constitue l'amélioration revendiquée dans la demande de brevet européen EP 50230 (BASF, 1981). On trouve aussi dans la demande de brevet français FR 2 132 359 (Uniroyal, 1972), la description de novolaques résorcine/aldéhydes alcoyliques possédant de 1 à 4 carbones, et leur revendication d'emploi pour l'adhérisation du caoutchouc sur des cablés textiles.

III - EXPOSE DE L'INVENTION

La demanderesse a découvert que, de façon très surprenante, certaines résines novolaques obtenues par condensation de phénols et d'aldéhydes lourds (c'est-à-dire avec un nombre de carbones égal ou supérieur à 6) avaient des structures différentes de celles des résines novolaques à base de formaldéhyde, qu'elles pouvaient être obtenues avec des rapports molaires aldéhyde:phénol supérieur à 1, et ceci avec des rendements proches de la théorie. Cet enseignement ne fait pas partie de l'état de la technique, et les brevets qui citent des novolaques à aldéhydes lourds, comme par exemple les brevets US 2 173 346 (Bakelite Corp., 1935), GB 790644 (Esso Research) ou US 2 131 249 (Balle), s'ils exemplifient des masses réactives dont les rapports aldéhydes/phénols avoisinent l'unité ne conduisent, du fait de rendements relativement faibles, qu'à des novolaques dont la stoechimétrie est celle des novolaques connues.

Avec les structures du type $[\phi CH(R_{n-1})]_p$-$\phi$ que l'on attribue habituellement aux novolaques de l'art antérieur, la gélification survient pour des rapports aldéhyde:phénol au maximum de 0,85-0,90 (voir l'ouvrage de KNOP & PILATO, "Phenolics resins", SPRINGERVERLAG ed., 1985, p. 25). On ignore les structures des novolaques selon l'invention qui acceptent sans gélification de notables excès d'aldéhyde par rapport à la théorie, et notamment celles des résines dont le rapport moléculaire aldéhyde:phénol est supérieur à 1. Les analyses par résonance magnétique nucléaire du proton des résines novolaques fabriquées à partir d'aldéhyde lourd uniquement, confirment que pour un aldéhyde ayant n carbones le rapport entre le nombre de protons de la chaîne aliphatique "$CH_3(CH_2)_{n-2}$" de l'aldéhyde portés par les carbones non liés à deux noyaux phénoliques, au proton porté par le carbone reliant deux noyaux phénoliques " $\phi CH(R_{n-1})\phi$ " ($\phi$ = noyau phénolique), était supérieur d'au moins 50% à la valeur théorique attendue, à savoir (2n-1). Les résines synthétisées avec des mélanges d'aldéhyde lourd et de formaldéhyde semblent avoir une structure intermédiaire entre celle des résines novolaques phénol/formaldéhyde et celle des résines novolaques phénol/aldéhyde lourd.

La présente invention concerne ainsi des résines de type novolaque qui résultent de la condensation en présence de catalyseurs acides et en milieu maintenu practiquement anhydride par élimination de l'eau de réaction au fur et à mesure de sa formation de réactifs aldéhydiques et de réactifs phénoliques dans un rapport aldéhydes:phénols compris entre 0,9 et 1,2, les réactifs aldéhydiques comportant de façon caractéristique au moins 50% en poids de composés du type aldéhyde aliphatique dont le nombre d'atomes de carbone est égal ou supérieur à 6. Elle concerne également leur mode d'obtention, et leur application, notamment comme résines renforçatrices des caoutchouc.

Les novolaques de l'invention sont réticulables par addition d'un donneur de formol comme, par exemple, l'hexaméthylènetétramine, le paraformaldéhyde, les résines mélamine-formol éthérifiées ou les résines phénoliques de type résol. Elles ont un point de fusion mesuré selon la méthode de bille et anneau (méthodes AFNOR T 66 008 ou DIN 53180) compris entre 50 et 150°C, et préférentiellement entre 80 et 120°C.

Les phénols utilisables dans l'invention sont les phénols dont la fonctionnalité, comprise comme le nombre de sites réactifs disponibles pour la condensation du formol, est supérieure à 2 pour que la résine novolaque possède une structure ramifiée ultérieurement réticulable en un produit tridimensionnel par réaction avec un donneur de formol. Comme exemples de tels phénols, on peut citer le phénol, les parabisphénols, la résorcine, le métacrésol et plus généralement les phénols alkylés en position méta. On peut également utiliser pour servir d'extendeurs de chaînes, de petites quantités de phénols bifonctionnels, tels que les phénols alkylés en ortho ou en para; il est alors nécessaire que la fonctionnalité moyenne des phénols reste supérieure à 2 pour que la novolaque obtenue reste tridimentionnellement réticulable.

Les aldéhydes utilisées dans l'invention sont les aldéhydes aliphatiques dont le nombre de carbones est supérieur ou égal à 6, qui peuvent être linéaires ou ramifiés. On peut aussi utiliser des mélanges d'isomères issus des synthèses oxo, par adition d'oxyde de carbone et d'hydrogène sur des oligomères de propylène ou des oléfines linéaires. Les aldéhydes préférés de l'invention sont ceux dont le nombre de carbone est compris entre 6 et 20 , ou mieux encore entre 6 et 15.

La demanderesse a aussi découvert un effet synergique lié à l'utilisation de mélanges d'aldéhydes lourds et de formaldéhyde dans les synthèses de novolaques, qui se manifeste par un accroissement très sensible et tout-à-fait inattendu de la dureté des melanges vulcanisés de caoutchoucs et de ces résines sans perdre pour autant l'excellente viscosité à cru des mélanges. Dans ces résines mixtes selon l'invention, on préfère que l'aldéhyde lourd se trouve au moins en masse à 50% du poids total des aldéhydes.

On peut aussi employer des aldéhydes aliphatiques insaturés en mélange avec les aldéhydes lourds. Cependant, dans ce cas, le taux maximum de ces aldéhydes insaturés doit être tel que lastructure des novolaques soit encore réticulable: en effet, les aldéhydes insaturés réagissent par leur double liaison à la fois sur le noyau phénolique et sur l'hydroxyle en donnant des arylalkyl-éthers, ce qui diminue la fonctionnalité et la réactivité des phénols (Voir R.N. DONGRE, Ind. Eng. Chem. Prod. Res. Dev., Vol. 24, N°4, 1985, qui démontre que les novolaques phénol/crotonaldéhyde restent thermoplastiques, même après réticulation par l'hexaméthylènetétramine). Selon l'invention, on préfère que le taux, exprimé en moles pour moles, d'aldéhyde insaturé ne dépasse pas 40% du total des aldéhydes. Bien entendu, on peut aussi ajouter de faibles quantités d'autres aldéhydes, par exemple, d'acétaldéhyde, de butyraldéhyde, de furfuraldéhyde, de benzaldéhyde.

Le rapport molaire entre les phénols et les aldéhydes lourds dépend évidemment des phénols utilisés pour la synthèse. Si l'on part uniquement de phénol avec un aldéhyde lourd, le rapport molaire aldéhyde:phénol peut varier entre 0,9:1 et 1,2:1 . Pour des rapports inférieurs à 0,9:1 , les rendements sont moins bons, car il reste du phénol qui n'a pas réagi et qu'il faut éliminer, les caoutchoutiers exigeant des résines avec des taux de phénol libre inférieur à 1% pour raisons de toxicité. Pour des rapports supérieurs à 1,2:1 , il y a gélification de la novolaque au cours de la synthèse. Il est d'ailleurs surprenant qu'on puisse obtenir des rapports molaires si élevés, car pour des résines novolaques phénol/formol, il est difficile de dépasser des rapports molaires de 0,9:1 sans gélification ou sans qu'il en résulte des résines avec des points de fusion incompatibles avec une utilisation dans le caoutchouc.

Un des avantages des aldéhydes lourds est l'obtention aisée de résines à rapports molaires élevés avec d'excellents rendements massiques, très proches des rapports théoriques correspondant aux poids de phénol et d'aldéhyde lourd introduits, uniquement diminués de l'eau de condensation, et ceci pour des rapports molaires aldéhyde:phénol supérieurs à 1 dans la résine finale. En suivant les enseignements de l'art antérieur (notamment du brevet européen EP 19 151), on ne savait obtenir de résines novolaques phénol/formaldéhyde à taux de phénol libre inférieur ou égal à 1% qu'au prix d'une l'élimination du phénol libre de produits de condensation qui en contiennent plus de 5% , opération qui accroît la complexité du procédé et nuit à son rendement.

## IV - MANIERES DE REALISER L'INVENTION

Les conditions de synthèse de ces résines novolaques sont telles qu'on est dans un milieu anhydre ou pratiquement anhydre. On opère donc sans addition d'eau, en coulant l'aldéhyde lourd dans le mélange des phénols et du catalyseur, et en éliminant en continu l'eau de condensation formée par une distillation azéotropique, l'aldéhyde qui se sépare dans le florentin étant recyclé. On peut améliorer la distillation en ajoutant un solvant hydrophobe pour améliorer la distillation, par exemple un solvant aromatique comme le toluène.

Les catalyseurs utilisables dans l'invention sont du type acides forts, comme l'acide sulfurique concentré ou les acides sulfoniques. Les taux d'utilisation sont inférieurs à 5% en poids par rapport aux phénols, et en général compris entre 0,1% et 1% en poids par rapport aux phénols.

Dans le cas de résines mixtes avec du formaldéhyde, on peut opérer de deux manières. Soit, que l'on fasse une première condensation des phénols avec l'aldéhyde lourd et qu'après la fin de la distillation azéotropique, on opère une deuxième condensation avec le formaldéhyde dans les conditions bien connues de l'homme de l'art. Soit que l'on commence par condenser le formaldéhyde les phénols, et que l'on poursuive par la condensation de l'aldéhyde lourd sur le mélange réactionnel; il faut alors qu'au début de la coulée de l'aldéhyde lourd, on ait un milieu de synthèse pratiquement anhydre. Ceci peut être réalisé facilement par l'homme de l'art, par exemple en concentrant le milieu réactionnel sous vide ou en opérant une distillation azéotropique. Si l'on utilise des mélanges d'aldéhydes lourds avec des aldéhydes insaturés, on peut condenser ces derniers, soit en début, soit à la fin, soit en mélange avec l'aldéhyde lourd, mais il faut de toutes façons que la condensation se déroule en milieu anhydre ou pratiquement anhydre.

Les autres conditions de synthèse sont très classiques. Après l'introduction de l'aldéhyde lourd, la distillation azéotropique est poursuivie jusqu'à la fin du dégagement de l'eau. On peut alors, si cela est jugé nécessaire, procéder à une neutralisation de la résine. La résine est ensuite concentrée sous vide jusqu'à obtention d'un point de fusion constant. Elle est ensuite refroidie et mise en forme d'écailles, de pastilles ou de morceaux.

## V - POSSIBILITES D'APPLICATION INDUSTRIELLE

Les résines selon l'invention se distinguent des résines novolaques connues antérieurement, notamment par leurs propriétés de renforcement des caoutchoucs vulcanisés très améliorées. De plus, elles apportent une réduction très importante de la viscosité du caoutchouc cru. Ceci est peut-être dû à la longue chaîne aliphatique apportée par les aldéhydes lourds ou à la structure spéciale de ces résines novolaques. Pour obtenir un tel effet de renforcement, on mélange par des moyens bien connus dans des mélangeurs internes ou externes la résine avec les caoutchoucs et les charges nécessaires, par exemple à une température comprise entre 80 et 170°C. Après refroidissement du mélange caoutchoutique, on introduit les agents de vulcanisation ainsi que le durcisseur de la résine, à des températures généralement comprises entre 80° et 120°C afin de ne pas provoquer une réticulation et une vulcanisation prématurées.

Les produits réticulants de la résine qui la rendront infusibles sont des donneurs de formol comme l'hexaméthylènetétramine, le paraformaldéhyde, le trioxy- ou tétraoxy-méthylène, des résines de mélamine éthérifiées, comme par exemple l'hexaméthoxyméthylolmélamine, ou bien des résols phénoliques.

Des caoutchoucs utilisables avec ces résines sont, par exemple, les caoutchoucs naturels, les caoutchoucs synthétiques tels que les styrène-butadiène, les acrylonitriles, les butyls, les copolymères élastomères éthylène-propylène-diène (EPDM), les polybutadiènes, polyisoprènes, ou des mélanges de

4

caoutchouc.

On peut ajouter aux caoutchoucs les charges habituelles, telles que des silices actives, du noir de carbone, du kaolin, de la craie, de l'oxyde de zinc, de l'acide stéarique, des huiles, des agents de protection, des agents de réticulation, des accélérateurs de vulcanisation et d'autres additifs classiques.

On ajoute les résines selon l'invention aux caoutchoucs à des taux compris entre 5 et 100 parties en poids et préférentiellement 10 à 60 parties en poids par 100 parties de caoutchouc.

Les durcisseurs de la résine sont introduits, par exemple, à des taux de 1 partie en poids à 80 parties en poids et préférentiellement de 3 à 25 parties en poids par 100 parties de résine. Ce taux dépend bien évidemment du type de réticulant utilisé. Il est cependant remarquable que pour les résines de l'invention, le taux optimum d'utilisation des durcisseurs est nettement inférieur à celui qui est nécessaire pour les résines novolaques à base de formaldéhyde: il s'agit là d'une caractéristique très positive pour l'application à la vulcanisation du caoutchouc, opération dans laquelle un excès de durcisseur de la résine, notamment d'hexaméthylènetétramine, est préjudiciable à la fois à la conduite des opération et à la qualité du produit fini. L'homme de l'art pourra facilement trouver avec un petit nombre d'essais la teneur optimum de durcisseur nécessaire pour chaque novolaque.

Les caoutchoucs sont ensuite confectionnés selon les techniques habituelles, par exemple par moulage, extrusion ou calandrage, puis vulcanisés, par exemple à la presse ou dans des fours à air chaud ou à micro-ondes, à des température comprise entre environ 130° et 210°C.

VI - EXEMPLES

L'invention est illustrée par les exemples non limitatifs suivants dans lesquels, sauf contre-indication, les pourcentages sont exprimés en poids pour poids.

Exemple 1

Dans un ballon tricol muni d'un séparateur Dean-Stark, d'une ampoule à brome et d'un agitateur, on introduit sous agitation 470 grammes de phénol (5 moles) et 4,75 grammes d'acide sulfurique concentré à 96%, on porte à 100°C et on coule en deux heures 570 grammes (5 moles) d'heptanal (produit commercial à 95% d'heptanal) tout en éliminant l'eau formée par distillation azéotropique, on poursuit ensuite la distillation azéotropique pendant 2 heures, on recueille 85 grammes d'eau (4,72 modes, soit 99% de la théorie par rapport à l'heptanal), on concentre ensuite sous pression atmosphérique jusqu'à 200°C, on met sous vide et on maintient 30 minutes à 200°C à une pression de 50 mm de mercure (poids de distillat : 64 grammes). On dépote la résine. Le rendement est de 909 grammes (soit un rendement de 98% par rapport aux matières premières engagées, compte tenu de la pureté de l'aldéhyde). Le point de fusion bille et anneau est de 83°C et la teneur en phénol libre de 0,5% .

L'analyse par résonance magnétique nucléaire du proton réalisée sur spectromètre BRUKER avec un champ magnétique principal à 200 mégahertz donne les résultats suivants:

| Nature des protons | Aromatiques | Ponts $\phi C\underline{H}(R_{n-1})\phi$ | Chaîne alipha tique $R_{n-1}$ |
|---|---|---|---|
| Déplacement chimique (ppm) | 6,5-7,6 | 3,8-4,7 | 0,8-2,8 |
| Surface d'intégration | 125,2 | 28,7 | 662,4 |

Le rapport du nombre de protons aliphatiques au nombre de protons liés à des noyaux phénoliques est égal à 23,08 , soit supérieur de 78% à la valeur théorique de 13 .
L'analyse comparative d'une résine novolaque phénol/formaldéhyde ayant un point de fusion bille et anneau de 100°C et une teneur en phénol libre de 0,8% donne:

| Nature des protons | Aromatiques | Ponts $CH_2$ | Chaîne aliphatique |
|---|---|---|---|
| Déplacement chimique (ppm) | 6,6-7,3 | 3,6-4 | - |
| Nombre de liaisons par noyau phénolique | 3,4 | 1,6 | - |

Chiffres d'où l'on déduit un nombre moyen de 3 noyaux par chaîne.

Exemple 1bis (contre-exemple)

Dans un ballon tricol muni d'un séparateur Dean-Stark, d'une ampoule à brome et d'un agitateur, on introduit sous agitation 796,6 grammes de phénol (8,47 moles), 8 grammes d'acide sulfurique concentré à 96% , on porte à 100°C et on coule en deux heures 611,4 grammes d'isobutyraldéhyde (8,47 moles) tout en éliminant l'eau formée par distillation azéotropique. On poursuit ensuite la distillation azéotropique pendant 2 heures, on concentre ensuite sous pression atmosphérique jusqu'à 200°C, on met sous vide et on maintient 30 minutes à 200°C à une pression de 50 mm de mercure. On dépote la résine, solide rouge, avec un rendement de 645 grammes (soit un rendement de 51% par rapport aux matières premières engagées et compte tenu de leur pureté).

Le point de fusion bille et anneau est de 108,5°C et la teneur en phénol libre de 0,5% .

Exemple 1 ter

Dans un ballon tricol muni d'un séparateur Dean-Stark, d'une ampoule à brome et d'un agitateur, on introduit sous agitation 846 grammes de phénol (9 moles), 200 grammes de toluène et 2,1 grammes d'acide sulfurique concentré à 96% .On porte à 100°C et on coule en deux heures 388,8 grammes (5,4 moles) de n-butyraldéhyde tout en éliminant l'eau formée par distillation azéotropique. On poursuit la distillation 1 heure, on recueille 97 grammes d'eau (soit 99,5% de la théorie). On concentre sous pression atmosphérique jusqu'à 200°C, puis on met sous vide progressivement jusqu'à 50 mm de mercure. On reste sous cette pression à 200-210°C pendant 30 minutes. On dépote une résine qui se prend en un solide marron-noir. Le rendement est de 860 grammes (soit 75,5% de la théorie). Le point de fusion bille et anneau est supérieur à 108,5°C et la teneur en phénol libre de 0,4% . Si on augmente le rapport molaire n-butyraldéhyde/phénol à 0,7, le point de fusion bille et anneau devient supérieur à 130°C, pour un rendement massique pratiquement inchangé.

L'analyse par RMN du proton de cette résine est la suivante :

| Nature des protons | Aromatiques | Ponts $\phi C\underline{H}(R_{n-1})$ | Chaîne aliphatique $\phi$ $R_{n-1}$ |
|---|---|---|---|
| Déplacement chimique (ppm) | 6,3-7,7 | 3,7-4,7 | 0,6-2,6 |
| Surface d'intégration | 300,4 | 83,9 | 578,7 |
| Nombre de protons par noyau phénolique | 3,24 | 1,76 | - |

Le rapport d'intégration des protons aliphatiques au nombre de protons liés à des noyaux phénoliques est de 6,9 pour une valeur théorique de 7.

Le calcul donne un nombre moyen de 8,33 noyaux phénoliques par chaîne, et un rapport molaire de 0,88 dans la résine finie. Si on admet que tout l'aldéhyde C4 introduit a réagi, le rendement théorique attendu est de 867 grammes, très proche du rendement expérimental.

Exemple 2

Dans un ballon tricol muni d'un séparateur Dean-Stark, d'une ampoule à brome et d'un agitateur, on introduit sous agitation 376 grammes de phénol (4 moles), 100 grammes de toluène et 3,8 grammes d'acide sulfurique concentré à 96% , on porte à 100°C et on coule en deux heures 750 grammes d'aldéhyde C10 (4,8 moles), tout en éliminant l'eau formée par distillation azéotropique. Cet aldéhyde est obtenu par synthèse "oxo" à partir de trimères de propylène; il titre 98,5% d'aldéhyde C10 et est constitué d'un nombre important d'isomères ramifiés. On poursuit ensuite la distillation azéotropique pendant 2 heures, on concentre ensuite sous pression atmosphérique jusqu'à 200°C, on met sous vide et on maintient 30 minutes à 200°C à une pression de 50 mm de mercure. On dépote la résine avec un rendement de 982 grammes (soit un rendement de 95% par rapport aux matières premières engagées en tenant compte de la pureté de l'aldéhyde). Le point de fusion bille et anneau est de 100°C et la teneur en phénol libre de 0,35% .

L'analyse par RMN du proton de cette résine est la suivante :

| Nature des protons | Aromatiques | Ponts $\phi CH(R_{n-1})\phi$ | Chaîne aliphatique $R_{n-1}$ |
|---|---|---|---|
| Déplacement chimique(ppm) | 6,5-7,6 | 3,6-4,7 | 0,4-2,5 |
| Surface d'intégration | 50 | 10,3 | 398,9 |

Le rapport du nombre de protons aliphatiques sur le nombre de protons liés à des noyaux phénoliques est 38,7, soit supérieur de 104% à la valeur théorique de 19.

Exemple 3

Dans un ballon tricol muni d'un séparateur Dean-Stark, d'une ampoule à brome et d'un agitateur, on introduit sous agitation 470 grammes de phénol (5 moles), 4,75 grammes d'acide sulfurique concentré à 96% et 150 grammes de toluène, on porte à 100°C et on coule en deux heures 704 grammes (5,5 moles) d'aldéhyde C8 (pureté : 98% ; produit obtenu par synthèse oxo à partir de polymères de propylène, coupe dite heptène) tout en éliminant l'eau formée par distillation azéotropique. On poursuit ensuite la distillation azéotropique pendant 2 heures, on concentre ensuite sous pression atmosphérique jusqu'à 200°C, on met sous vide et on maintient 30 minutes à 200°C à une pression de 50 mm de mercure. On dépote la résine, solide marron, avec un rendement de 972 grammes (soit un rendement de 92% par rapport aux matières premières engagées et compte tenu de leur pureté). Le point de fusion bille et anneau est de 108°C et la teneur en phénol libre de 0,6% .

Exemple 4

Dans un ballon tricol muni d'une agitation et d'un réfrigérant, on charge 564 grammes de phénol (6 moles) et 5,6 grammes d'une solution d'acide octylphénolsulfoné à 50% dans le toluène, on porte à 100°C et on coule en 15 minutes 114 grammes d'une solution à 50% de formaldéhyde (1,9 moles). On maintient à reflux 1 heure et demie, puis on passe en concentration atmosphérique jusqu'à ce que la température du milieu réactionnel soit de 135°C environ. On refroidit vers 110°C et on ajoute 200 grammes de toluène. On introduit un séparateur Dean-Stark dans l'appareillage et on coule en 45 minutes 592,8 grammes de l'aldéhyde C10 précédemment décrit (3,8 moles), tout en éliminant l'eau formée par distillation azéotropique. On poursuit ensuite la distillation azéotropique pendant 2 heures, on concentre ensuite sous pression atmosphérique jusqu'à 200°C, on met sous vide et on maintient 30 minutes à 200°C à une pression de 50 mm de mercure. On dépote la résine, qui est un solide rouge.Le rendement est de 1009 grammes (soit 91% par rapport aux matières premières engagées en tenant compte de la pureté de l'aldéhyde). Le point de fusion bille et anneau est de 98°C et la teneur en phénol libre de 0,3% .

Exemple 5

On opère comme dans l'exemple 4, mais on introduit 192 grammes de la solution à 50% de formaldéhyde et 249,6 grammes d'aldéhyde C10. On récupère une résine orange dont le point bille et anneau est de 101°C, la teneur en phénol libre de 0,8% . Le rendement est de 728 grammes (89% du rendement théorique).

Exemple 6

Dans un ballon tricol muni d'un séparateur Dean-Stark, d'une ampoule à brome et d'un agitateur, on introduit sous agitation 572 grammes de phénol (6 moles), 200 grammes de toluène et 7,5 grammes d'une solution d'acide octylphénolsulfonique à 50% dans le toluène, on porte à 100°C et on coule en 45 minutes 312 grammes d'aldéhyde C10 (2 moles), tout en éliminant l'eau formée par distillation azéotropique. On maintient ensuite en distillation 45 minutes. On passe en reflux total et on coule en 30 minutes 240 grammes d'une solution à 50% de formaldéhyde (4 moles). On maintient 1 heure à reflux, puis on passe en concentration atmosphérique jusqu'à 200°C dans le milieu réactionnel, on met sous vide et on maintient 30 minutes à 200°C à une pression de 50 mm de mercure. On dépote la résine qui est un solide rouge. Le rendement est de 922 grammes (soit 86% par rapport aux matières premières engagées en tenant compte de la pureté de l'aldéhyde). Le point de fusion bille et anneau est de 100°C et la teneur en phénol libre de 0,9% .

Exemple 7

Dans un ballon tricol muni d'un séparateur Dean-Stark, d'une ampoule à brome et d'un agitateur, on introduit sous agitation 517 grammes de phénol (5,5 moles), 150 grammes de toluène, 15,5 grammes d'acide sulfurique à 96% et 277,2 grammes (1,32 moles) de 2-nonylpenténal (aldéhyde obtenu par crotonisation de l'heptanal), on porte à 100°C tout en éliminant l'eau formée par distillation azéotropique pendant 1 heure et demie. On coule en 45 minutes 602 grammes d'heptanal (5,28 moles), tout en poursuivant la distillation azéotropique. On maintient ensuite en distillation une heure, puis on passe en concentration atmosphérique jusqu'à 200°C dans le milieu réactionnel, on met sous vide et on maintient 30 minutes à 200°C à une pression de 50 mm de mercure. On dépote la résine qui est un solide brun, avec un rendement de 1260 grammes (soit 90% par rapport aux matières premières engagées en tenant compte de la pureté de l'aldéhyde). Le point de fusion bille et anneau est de 87°C et la teneur en phénol libre de 0,5% .

Exemple 8

Dans un ballon tricol muni d'un séparateur Dean-Stark, d'une ampoule à brome et d'un agitateur, on introduit sous agitation 550 grammes de résorcinol (5,5 moles), 200 grammes de toluène et 2,8 grammes d'une solution à 65% d'acide paratoluènesulfonique, on porte à 100°C et on coule en deux heures 625 grammes d'aldéhyde C10 (4,4 moles) précédemment décrit, tout en éliminant l'eau formée par distillation azéotropique, on poursuit la distillation azéotropique pendant 2 heures, on concentre ensuite sous pression atmosphérique jusqu'à 150°C, on met sous vide et on maintient 30 minutes à 150°C à une pression de 50 mm de mercure. On dépote la résine qui est un solide rouge, avec un rendement de 1032 grammes (soit 94% par rapport aux matières premières engagées en tenant compte de la pureté de l'aldéhyde). Le point de fusion bille et anneau est de 96°C et la teneur en résorcinol libre de 8,4% .
Une résine résorcinol équivalente, mais synthétisée avec du formaldéhyde a un taux de résorcine libre de 19% environ, d'autre part la résine de l'invention, contrairement aux novolaques résorcinol formaldéhyde n'est pas hydrophile, elle ne devient donc pas collante, quand on la laisse à l'air ambiant. Ce sont deux avantages substantiels car on supprime une cause importante du mottage et on diminue les problèmes de volatils et d'efflorescence des caoutchoucs lors de l'utilisation de ces résines.

Exemple 9

Cet exemple illustre une synthèse de novolaques contenant des phénols bifonctionnels.

Dans un ballon tricol muni d'un séparateur Dean-Stark, d'une ampoule à brome et d'un agitateur, on introduit sous agitation 377 grammes de phénol (4 moles), 277 grammes de paraoctylphénol (1,34 mole) et 10,2 grammes d'acide sulfurique concentré à 96%, on porte à 100°C et on coule en deux heures 762,8 grammes (6,7 moles) d'heptanal (fourni par la société ATOCHEM, pureté 95%) tout en éliminant l'eau formée par distillation azéotropique. On poursuit ensuite la distillation azéotropique pendant 2 heures; on ajoute alors 17,6 grammes de morpholine pour neutraliser, puis on concentre ensuite sous pression atmosphérique jusqu'à 200°C, on met sous vide et on maintient 30 minutes à 200°C à une pression de 50 mm de mercure. On dépote la résine avec un rendement de 1266 grammes (soit 98% par rapport aux matières premières engagées en tenant compte de la pureté de l'aldéhyde). Le point de fusion bille et anneau est de 82°C et la teneur en phénol libre de 3% .

Exemple 10

Exemple d'application des résines comme renforçateurs dans le caoutchouc pour constitution de talons de pneumatiques.

Composition du mélange caoutchouc.

| | |
|---|---|
| Caoutchouc naturel | 60 |
| Caoutchouc butadiène | 40 |
| Noir de carbone | 80 |
| Huile | 5 |
| Acide stéarique | 1,5 |
| Oxyde de zinc | 7 |
| Résine renforçatrice (novolaque phénolique) | 15 |
| Hexaméthylène tétramine | 3 |
| Soufre insoluble | 2,2 |
| Système accélérateur/retardateur | 1,4 |
| Agent de protection | 1 |

Mode opératoire

Mélangeur interne Banbury de capacité 1,85 litres
Coefficient de remplissage : 0,9
Vitesse initiale des rotors : 75t/min
Température en début de cycle : 70°C

Déroulement du cycle

t = 0            incorporation du caoutchouc naturel
t = 1min 30s     incorporation du caoutchouc butadiène
t = 2min 30s     incorporation de l'huile et de la moitié du noir
t = 3min 30s     incorporation de l'autre moitié du noir et de la résine broyée au mortier
t = 4min 30s     incorporation de l'oxyde de zinc, de l'acide stéarique et de l'antioxydant
t = 6min         tombée du mélange (température entre 145° et 155°C)

A la tombée du mélangeur interne, les mélanges sont mis en plaques par passage sur cylindres à 70°C, puis laissés au repos jusqu'au lendemain. La reprise est effectuée sur mélangeur à cylindre externe à 70°C, avec une vitesse des cylindres de 2418 t/min.

t = 0            mise du mélange maître
t = 1min         incorporation de l'accélérateur
t = 3min         incorporation du retardateur
t = 4min         incorporation du soufre
t = 6 à 10min    homogénéisation, puis 6 passages au fin
t = 10min        sortie du mélange

Température de vulcanisation: 160°C.

Normes des essais

Viscosité MOONEY à 100°C : norme NFT 43-005
Grillage MOONEY à 121°C : norme NFT 43-004

$t_3$ et $t_{18}$ sont les temps en minutes et secondes au bout desquels la viscosité a monté respectivement de 3 points et de 18 points ; index de vulcanisation = $t_{18}$-$t_3$).

Rhéomètre MONSANTO : norme NFT 43-015
Température de l'essai: la température de vulcanisation de 160°C ;
ML et MH sont les couples minimum et maximum ;
$t_s(0,2)$ : temps en minutes et secondes pour lequel la viscosité est minimum ;
$t_c(90)$ : temps en minutes et secondes pour lequel la viscosité atteint 90% du couple maximum enregistrable. (Cette valeur est prise comme temps de vulcanisation).

Dureté SHORE A instantanée :norme NFT 46-052
Déformation rémanente après compression : norme NFT 46-011
(22 heures/25%/70°C)

Module de traction à 10% d'allongement : vitesse de traction
100 mm/min mesurée après stabilisation.

Les trois derniers essais sont conduits pour chaque mélange sur des plaques 300 X 300 X 2mm destinées à la découpe des éprouvettes de traction et aux mesures de dureté.

Références des résines exemplifiées

Témoin :       essai sans résine ni hexaméthylènetétramine
N°1 :          résine novolaque phénol/formaldéhyde, point de fusion bille et anneau : 100°C ; phénol libre : 0,5%
N°2 :          résine du contre-exemple 1ter
N°3 :          résine de l'exemple 1
N°4 :          résine de l'exemple 4
N°5 :          résine de l'exemple 7

Les résultats de ces essais figurent au tableau ci-après.

Tableau 1

| Résines | Témoin | 1 | 2 | 3 | 4 | 5 |
|---|---|---|---|---|---|---|
| Viscosité MOONEY (100° C) | 98,5 | 112,5 | 106 | 86 | 95 | 101 |
| Rhéomètre MOONEY (121° C) | | | | | | |
| Viscosité minium | 48 | 53 | 48 | 41,5 | 44,5 | 49,5 |
| t3 (minutes : secondes) | 48:05 | 12:36 | 15:05 | 17:48 | 21:40 | 15:00 |
| t18 (minutes : secondes) | 57:17 | 37:36 | 39:10 | 34:15 | 41 | 34:10 |
| indice de vulcanisation | 9:10 | 25:00 | 16:27 | 19:20 | 19:10 | |
| Rhéomètre MONSANTO (160° C) | | | | | | |
| ML (Nm) | 2,77 | 2,67 | 2,46 | 2,27 | 2,3 | 2,43 |
| MH (Nm) | 10,48 | 13,19 | 13,58 | 13,85 | 13,65 | 13,14 |
| ts (0,2) (minutes : secondes) | 3:45 | 1:41 | 1:53 | 1:50 | 1:59 | 1:48 |
| t90 (minutes : secondes) | 10:02 | 8:16 | 8:04 | 7:49 | 8:18 | 7:43 |
| Dureté SHORE à (23° C) | 72 | 91 | 89 | 91 | 92 | 93 |
| Module de traction à 10 % d'allongement | 0,67 | 1,83 | 1,77 | 1,93 | 1,96 | 2,14 |
| Déformation rémanante (%) | 30,2 | 43,3 | 44 | 56,2 | 49,5 | 51,7 |

L'homme de l'art verra dans ces exemples l'intérêt des nouvelles résines novolaques phénol/aldéhyde lourd par rapport à aux novolaques connues au formaldéhyde ou à l'isobutyraldéhyde: faible viscosité à cru, t3 (scorch time) long, indice de vulcanisation court, bonne dureté. Il ne s'agit pas ici de mélanges optimisés, desquels on peut raisonnablement attendre de meilleures performances par emploi des résines selon l'invention.

**Revendications**

1. Procédé de préparation de novolaques dont le rapport aldéhydes:phénols est compris entre 0,9 et 1,2 et dont au moins 50% des composants aldéhydiques proviennent d'aldéhydes aliphatiques à nombre d'atomes de carbone égal ou supérieur à 6, qui consiste à faire réagir les réactifs phénoliques et les réactifs aldéhydiques en présence de catalyseurs acides, et à éliminer l'eau de réaction au fur et à mesure de sa formation.

2. Résines novolaques susceptibles d'être obtenues par condensation en présence de catalyseurs acides et en milieu maintenu pratiquement anhydride par élimination de l'eau de réaction au fur et à mesure de sa formation, de réactifs aldéhydiques et de réactifs phénoliques dans un rapport aldéhydes:phénols compris entre 0,9 et 1,2, caractérisées en ce que les réactifs aldéhydiques comportent au moins 50% en poids de composés du type aldéhyde aliphatique dont le nombre d'atomes de carbone est égal ou supérieur à 6.

3. Résines novolaques selon la revendication 2, caractérisées en ce que les réactifs aldéhydiques sont uniquement composés d'aldéhydes dont le nombre d'atomes de carbone est égal ou supérieur à 6.

4. Résines novolaques selon les revendications 2 et 3, caractérisées en ce que l'aldéhyde lourd est l'heptanal.

5. Résines novolaques selon les revendications 2 et 3, caractérisées en ce que l'aldéhyde lourd est un aldéhyde de synthèse oxo.

6. Résines novolaques selon la revendication 2, caractérisées en ce que les réactifs phénoliques comportent de la résorcine.

7. Application des résines novolaques définies ou obtenues selon l'une des revendications 1 à 6 au renforcement des caoutchoucs vulcanisés par addition desdites résines aux mélanges à vulcaniser à des taux compris entre 5 à 50 parties par 100 parties de caoutchouc.

**Claims**

1. Process for the preparation of novolaks in which the aldehydes:phenols ratio is between 0.9 and 1.2 and in which at least 50 % of the aldehyde components originate from aliphatic aldehydes with a number of carbon atoms equal to or greater than 6, which consists in reacting the phenolic reactants and the aldehyde reactants in the presence of acidic catalysts and in removing the water of reaction as it is being formed.

2. Novolak resins capable of being obtained by condensation in the presence of acidic catalysts and in a medium which is maintained practically anhydrous by removal of the water of reaction as it is being formed, of aldehyde reactants and of phenolic reactants in an aldehydes:phenols ratio of between 0.9 and 1.2, characterized in that the aldehyde reactants contain at least 50 % by weight of compounds of the aliphatic aldehyde type in which the number of carbon atoms is equal to or greater than 6.

3. Novolak resins according to Claim 2, characterized in that the aldehyde reactants consist only of aldehydes in which the number of carbon atoms is equal to or greater than 6.

4. Novolak resins according to Claim 2 and 3, characterized in that the dense aldehyde is heptanal.

5. Novolak resins according to Claims 2 and 3, characterized in that the dense aldehyde is an aldehyde from oxo synthesis.

6. Novolak resins according to Claim 2, characterized in that the phenolic reactants contain resorcinol.

7. Application of the novolak resins defined or obtained according to one of Claims 1 to 6 to the reinforcement of vulcanized rubbers by addition of the said resins to the mixtures to be vulcanized in proportions of between 5 and 50 parts per 100 parts of rubber.

**Patentansprüche**

1. Verfahren zur Herstellung von Novolaken, deren Aldehyd/Phenol-Verhältnis zwischen 0,9 und 1,2 liegt und bei denen mindestens 50% der Aldehydbestandteile aus aliphatischen Aldehyden mit 6 oder mehr Kohlenstoffatomen stammen, das darin besteht, die Phenol- und Aldehydkomponenten in Gegenwart von sauren Katalysatoren reagieren zu lassen und das Reaktionswasser nach Maßgabe seiner Bildung zu entfernen.

2. Novolak-Harze, erhältlich durch Kondensation von aldehydischen und phenolischen Reaktanden in einem Aldehyd/Phenol-Verhältnis zwischen 0,9 und 1,2 in Gegenwart saurer Katalysatoren und in einem praktisch wasserfreien Milieu durch Entfernung des Reaktionswassers im Maße seiner Bildung, dadurch gekennzeichnet, daß die Aldehydkomponenten mindestens 50 Gew.% an aliphatischen Aldehyden mit 6 oder mehr Kohlenstoffatomen enthalten.

3. Novolak-Harze nach Anspruch 2, dadurch gekennzeichnet, daß die Aldehydkomponenten nur aus Aldehyden zusammengesetzt sind, deren Anzahl an Kohlenstoffatomen gleich oder größer 6 ist.

4. Novolak-Harze nach Anspruch 2 und 3, dadurch gekennzeichnet, daß der langkettige Aldehyd Heptanal ist.

5. Novolak-Harze nach Anspruch 2 und 3, dadurch gekennzeichnet, daß der langkettige Aldehyd ein Aldehyd aus einer Oxo-Synthese ist.

6. Novolak-Harze nach Anspruch 2, dadurch gekennzeichnet, daß die Phenolkomponenten Resorcin enthalten.

7. Verwendung der nach einem der Ansprüche 1 bis 6 definierten oder erhaltenen Novolak-Harzen zur Verstärkung von vulkanisiertem Kautschuk durch Addition der genannten Harze zu den Vulkanisationsmischungen in einer Menge von 5 bis 50 Teilen auf 100 Teile Kautschuk.